# EUROPEAN PATENT APPLICATION

(11) **EP 4 624 226 A1**
(43) Date of publication of application: **01.10.2025**
(21) Application number: 24780640.9
(22) Date of filing: 28.03.2024
(51) Int. Cl.: B60L 9/18, B60H 1/22, B60K 1/02, B60K 1/04, B60L 1/00, B60L 1/02, B60L 50/60

(54) **ELECTRIC DRIVE DEVICE FOR VEHICLE**

(30) Priority: 31.03.2023 JP 2023057843
(71) Applicant: AISIN CORPORATION, Kariya-shi, Aichi 448-8650 (JP)
(72) Inventor: TAKAHASHI, Ryohei, Kariya-shi, Aichi 448-8650 (JP); SUYAMA, Daiki, Kariya-shi, Aichi 448-8650 (JP)
(74) Representative: Kramer Barske Schmidtchen Patentanwälte PartG mbB
(86) International application number: PCT/JP2024/012655
(87) International publication number: WO 2024/204540

(57) **Abstract**

An electric drive device for a vehicle having a rear-wheel drive mode and a four-wheel drive mode includes, on the rear wheel side of a four-wheel drive vehicle, a rear-wheel drive device including a permanent magnet motor and a first power transmission mechanism and configured to be driven by electric power supplied from a battery and transmit a driving rotational force to a rear wheel, and a power conversion module in which a first inverter configured to operate the rear-wheel drive device and a power supply unit connected to the battery and configured to perform power conversion are integrated. The vehicle electric drive further includes, on the front wheel side of the four-wheel drive vehicle, a front-wheel drive device including a wound-field motor and a second power transmission mechanism and configured to transmit a driving rotational force to a front wheel, and a heat exchange system including a heat transfer mechanism and configured to use waste heat from the front-wheel drive device and a second inverter for an air conditioning system. The rear-wheel drive device and the power conversion module are integrated.

## Description

### TECHNICAL FIELD

The present disclosure relates to electric drive devices for vehicles.

### BACKGROUND ART

Vehicles equipped with a motor as a driving source for propulsion (hybrid electric vehicle (HEV), plug-in hybrid electric vehicle (PHEV), battery electric vehicle (BEV), fuel cell electric vehicle (FCEV), etc.) have been increasingly used in recent years. These vehicles (hereinafter collectively referred to as "electrified vehicles") include a heat exchange system for warming up and cooling the motor etc.

Patent Document 1 discloses a four-wheel drive electrified vehicle equipped with a drive unit and an inverter module for each of the front and rear wheels. In four-wheel drive electrified vehicles, a battery is mounted in the center of the vehicle, and supplies electric power to inverter modules of the front and rear wheels to operate drive units, thereby driving a front-wheel drive motor and a rear-wheel drive motor.

### Related Art Documents

### Patent Documents

Patent Document 1: U.S. Unexamined Patent Application Publication No. 2022/0348091

### SUMMARY OF THE INVENTION

### Problem to be Solved by the Invention

Patent Document 1 discloses the four-wheel drive configuration of an electrified vehicle, but does not disclose anything about a heat exchange system for warming up and cooling the drive units, the battery, etc. that serve as driving sources for the electrified vehicle. In four-wheel drive electrified vehicles, the front and rear wheels are rotated by different motors. However, particularly in high-output electrified vehicles, a motor for the rear wheels that provides traction during acceleration often serves as a main motor, and a motor for the front wheels often serves as an auxiliary motor. In such cases, considering the power supply to the motors and the ease of battery charging, a power conversion module including an inverter, an on-board charger, etc. needs to be disposed in an optimal location. However, Patent Document 1 does not disclose anything regarding the placement of the power conversion module. In electrified vehicles, it is also necessary to reduce deterioration in energy efficiency and fuel efficiency (hereinafter referred to as "energy efficiency etc.") due to the use of heating in winter. However, Patent Document 1 does not disclose anything regarding this point either.

Therefore, a vehicle electric drive device is desired that is arranged suitably for high output and that can improve energy efficiency etc. in a four-wheel drive vehicle in which the front and rear wheels are rotated by separate drive motors.

### Means for Solving the Problem

A characteristic configuration of a vehicle electric drive device according to the present disclosure is as follows. The vehicle electric drive device includes, on the rear wheel side of a four-wheel drive vehicle including a rear-wheel drive mode and a four-wheel drive mode, a rear-wheel drive device including a permanent magnet motor and a first power transmission mechanism and configured to be driven by electric power supplied from a battery and transmit a driving rotational force to a rear wheel, and a power conversion module in which a first inverter configured to operate the rear-wheel drive device and a power supply unit connected to the battery and configured to perform power conversion are integrated. The vehicle electric drive further includes, on the front wheel side of the four-wheel drive vehicle, a front-wheel drive device including a wound-field motor and a second power transmission mechanism and configured to transmit a driving rotational force to a front wheel, and a heat exchange system including a heat transfer mechanism and configured to use waste heat from the front-wheel drive device and a second inverter for an air conditioning system. The rear-wheel drive device and the power conversion module are integrated.

In a high-output four-wheel drive vehicle, traction is applied to the rear wheels during acceleration. Therefore, in this configuration, smooth acceleration can be implemented by using, in the rear-wheel drive device, the permanent magnet motor that is better for low-speed rotation. In this configuration, the rear-wheel drive device and the power conversion module are disposed on the rear wheel side of the four-wheel drive vehicle. Therefore, high-voltage wires and coolant wires needed for each of the rear-wheel drive device and the power conversion module can be arranged in a concentrated manner, which can minimize wiring and piping. As a result, the space occupied by the vehicle electric drive device in the four-wheel drive vehicle can be reduced.

In this configuration, the wound-field motor is used as a drive motor for the front-wheel drive device. The wound-field motor can be used to generate heat by energizing the field coil and the armature coil in such a manner that a rotating magnetic field is not generated. Heat can thus be generated without rotating the wound-field motor. Accordingly, even while the four-wheel drive vehicle is stopped, a coolant that cools the wound-field motor can be heated and used for heating the vehicle cabin.

An air conditioning system for a vehicle cabin is typically disposed at the front of the vehicle. Therefore, disposing the heat exchange system on the front wheel side of the four-wheel drive vehicle as in this configuration can reduce the length of the pipe for circulating the coolant or refrigerant from the heat exchange system to the air conditioning system. Accordingly, particularly during heating, the coolant heated by the heat generated by the front-wheel drive device is used for heating without being cooled. As a result, the heat utilization efficiency can be enhanced, and the energy efficiency etc. can be improved.

Integrating the rear-wheel drive device and the power conversion module can reduce the total volume compared to a case where they are configured as separate components. As a result, the space efficiency can be improved. Moreover, common high-voltage wires and common coolant wires can be used for both the rear-wheel drive device and the power conversion module.

As described above, a vehicle electric drive device can be provided that is arranged suitably for high output and that can improve energy efficiency etc. in a four-wheel drive vehicle in which the front and rear wheels are rotated by separate drive motors.

### BRIEF DESCRIPTION OF THE DRAWINGS

[FIG. 1] FIG. 1 is a diagram showing a schematic configuration of a vehicle electric drive device according to an embodiment.
[FIG. 2] FIG. 2 is a perspective view showing a rear-wheel drive device and a power conversion module.
[FIG. 3] FIG. 3 is a perspective view showing a front-wheel drive device.
[FIG. 4] FIG. 4 is a diagram showing the configuration of a heat exchange system.
[FIG. 5] FIG. 5 is a perspective view showing a heat exchange module.

### MODES FOR CARRYING OUT THE INVENTION

Hereinafter, embodiments of a vehicle electric drive device according to the present disclosure will be described in detail with reference to the drawings. The embodiments described below are illustrative examples of the present disclosure, and the present disclosure is not limited to these embodiments. Therefore, the present disclosure can be carried out in various forms without departing from the spirit and scope of the present disclosure/

### [Overall Configuration]

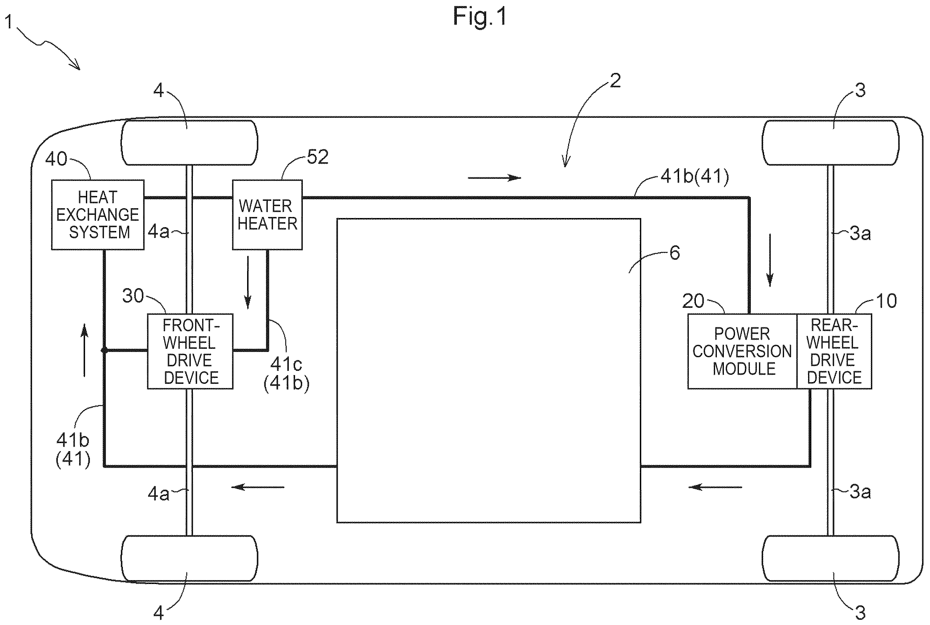

FIG. 1 shows the configuration of a four-wheel drive vehicle 1 equipped with a vehicle electric drive device 2 according to the present embodiment. The four-wheel drive vehicle 1 is a vehicle that generates driving force for both rear wheels 3 and front wheels 4. The four-wheel drive vehicle 1 of the present embodiment is an electrified vehicle equipped with wheel-driving motors as a driving source for propulsion (hybrid electric vehicle (HEV), plug-in hybrid electric vehicle (PHEV), battery electric vehicle (BEV), fuel cell electric vehicle (FCEV), etc.). The vehicle electric drive device 2 includes a rear-wheel drive device 10, a power conversion module 20, a front-wheel drive device 30, and a heat exchange system 40. The four-wheel drive vehicle 1 of the present embodiment has a rear-wheel drive mode in which the rear wheels 3 are driven by the rear-wheel drive device 10, and a four-wheel drive mode in which the front wheels 4 and the rear wheels 3 are driven by the front-wheel drive device 30 and the rear-wheel drive device 10. In this case, the rear-wheel drive device 10 serves as a main drive device, and the front-wheel drive device 30 serves as an auxiliary drive device.

### [Configuration of Rear-Wheel Drive Device and Power Conversion Module]

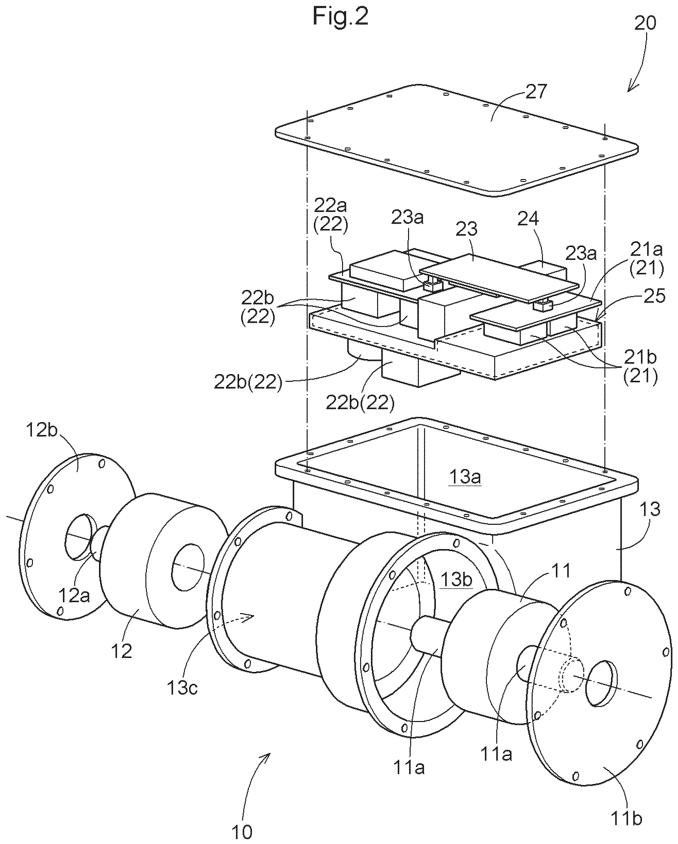

As shown in FIG. 2, the rear-wheel drive device 10 and the power conversion module 20 are both housed and integrated in a housing 13. The rear-wheel drive device 10 includes a permanent magnet motor 11 and a first power transmission mechanism 12. Since the permanent magnet motor 11 is a known motor that generates a magnetic field using permanent magnets, detailed description thereof will be omitted. The power conversion module 20 includes a first inverter 21 and a power supply unit 22. The rear-wheel drive device 10 and the power conversion module 20 are disposed near the rear wheels 3 (at the rear of the four-wheel drive vehicle 1).

The housing 13 has a first space 13a, a second space 13b, and a third space 13c. The second space 13b and the third space 13c are located to the side of the first space 13a. The power conversion module 20 is housed in the first space 13a, the permanent magnet motor 11 of the rear-wheel drive device 10 is housed in the second space 13b, and the first power transmission mechanism 12 is housed in the third space 13c.

The first inverter 21 of the power conversion module 20 housed in the first space 13a includes a motor drive board 21a on which a switching device 21b for controlling a drive current for driving the permanent magnet motor 11 is mounted. Electric power is supplied from a battery 6 to the power conversion module 20. That is, the permanent magnet motor 11 is driven by electric power supplied from the battery 6. Since the configuration of the first inverter 21 is known in the art, detailed description thereof will be omitted.

The power supply unit 22 of the power conversion module 20 is connected to the battery 6 and performs power conversion. The battery 6 is a high-voltage battery that drives the permanent magnet motor 11. The power supply unit 22 includes an OBC (On Board Charger) board 22a on which a power converter 22b is mounted. The power converter 22b includes at least an AC-DC converter that converts an externally input alternating current to a direct current and a DC-DC converter that converts a direct current voltage to a direct current voltage suitable for charging the battery 6. Since the configurations of the AC-DC converter and the DC-DC converter are known in the art, detailed description thereof will be omitted.

The first inverter 21 and the power supply unit 22 are integrated within the first space 13a of the housing 13. The term "integrated" includes not only a structure in which the components are arranged within the same housing 13, but also a structure in which the housing of the first inverter 21 and the housing of the power supply unit 22 are separate and these housings are fixed together to form a single unit.

The power conversion module 20 includes a control board 23 that controls the first inverter 21 and the power supply unit 22. The motor drive board 21a, the OBC board 22a, and the control board 23 are separate boards. The motor drive board 21a and the control board 23 are connected by a connector 23a, and the OBC board 22a and the control board 23 are connected by a connector 23a. In addition to the above components, the power conversion module 20 includes a film capacitor 24 used both for smoothing the first inverter 21 and for smoothing the secondary side of the DC-DC converter of the power converter 22b, and a cooling plate 25 having an internal space through which a coolant flows. The housing 13 has an opening on the upper side of the first space 13a, and the power conversion module 20 is housed in the first space 13a through the opening. The opening is closed by a lid 27, and therefore, the first space 13a is a closed space. In the present embodiment, the coolant is, for example, an antifreeze solution or a long-life coolant (LLC) mainly containing ethylene glycol etc.

The permanent magnet motor 11 of the rear-wheel drive device 10 that is driven by the first inverter 21 of the power conversion module 20 is housed in the second space 13b. The first power transmission mechanism 12 that reduces the rotational speed of the permanent magnet motor 11 and outputs the resultant rotation is housed in the third space 13c. In the housing 13, the second space 13b houses the permanent magnet motor 11 from the side, and is closed by a motor cover 11b fastened with bolts, not shown, to form a closed space. Motor shafts 11a extend from both sides of the permanent magnet motor 11 along its rotational axis. One of the motor shafts 11a passes through the motor cover 11b and is exposed to the outside of the housing 13. The other motor shaft 11a extends into the third space 13c.

The third space 13c houses the first power transmission mechanism 12 from the side, and is closed by a gear cover 12b fastened with bolts, not shown, to form a closed space. The other motor shaft 11a extending from the second space 13b is connected to the first power transmission mechanism 12, and the rotation of the permanent magnet motor 11 is input to the first power transmission mechanism 12 via the motor shaft 11a. The first power transmission mechanism 12 reduces the rotational speed of the permanent magnet motor 11 and outputs the resultant rotation from a gear shaft 12a. The gear shaft 12a passes through the gear cover 12b and is exposed to the outside of the housing 13. The driving force of the permanent magnet motor 11 output from the gear shaft 12a is transmitted to an axle 3a to drive the rear wheels 3 (see FIG. 1).

### [Configuration of Front-Wheel Drive Device]

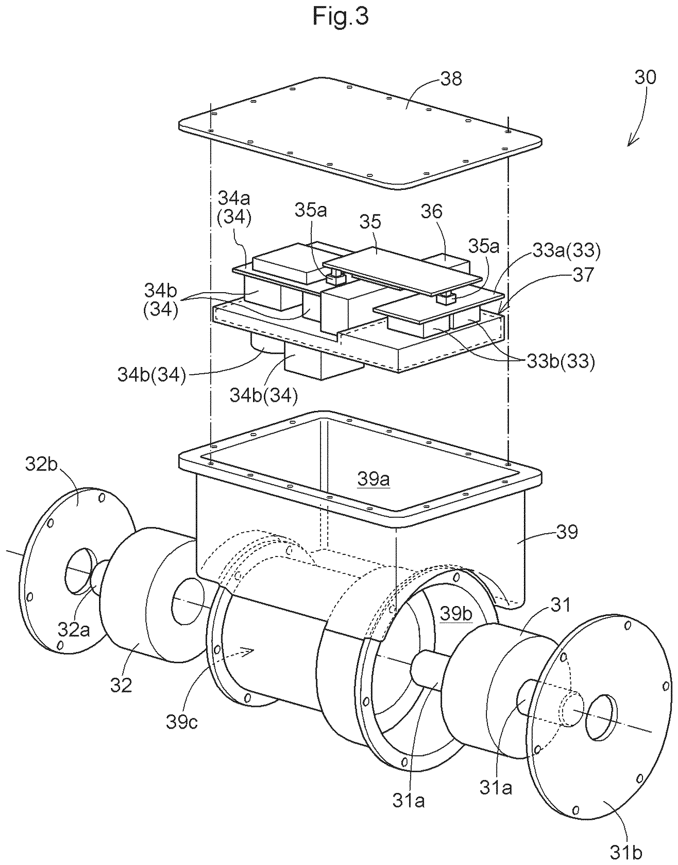

As shown in FIG. 3, the front-wheel drive device 30 is housed in a housing 39. The front-wheel drive device 30 includes a wound-field motor 31 and a second power transmission mechanism 32. Since the wound-field motor 31 is a known motor that generates a magnetic field using a field coil, detailed description thereof will be omitted. The front-wheel drive device 30 is disposed near the front wheels 4 (at the front of the four-wheel drive vehicle 1) (see FIG. 1).

The housing 39 has a first space 39a, a second space 39b, and a third space 39c. The second space 39b and the third space 39c are located below the first space 39a. A second inverter 33 and a power supply converter 34 are housed in the first space 39a, the wound-field motor 31 of the front-wheel drive device 30 is housed in the second space 39b, and the second power transmission mechanism 32 is housed in the third space 39c.

The second inverter 33 housed in the first space 39a includes an armature coil drive board 33a on which a switching device 33b for controlling a drive current for driving an armature coil of the wound-field motor 31 is mounted. Since the configuration of the second inverter 33 is known in the art, detailed description thereof will be omitted.

The power supply converter 34 housed in the first space 39a includes a field coil drive board 34a on which a power converter 34b for controlling a drive current for driving the field coil of the wound-field motor 31 is mounted. The power converter 34b includes a DC-DC converter that converts the direct current voltage of the battery 6 to a direct current voltage suitable for supplying power to the field coil of the wound-field motor 31. Since the configuration of the DC-DC converter is known in the art, detailed description thereof will be omitted.

The front-wheel drive device 30 includes a control board 35 that controls the second inverter 33 and the power supply converter 34. The armature coil drive board 33a, the field coil drive board 34a, and the control board 35 are separate boards. The armature coil drive board 33a and the control board 35 are connected by a connector 35a, and the field coil drive board 34a and the control board 35 are each connected by a connector 35a. In addition to the above components, the front-wheel drive device 30 includes a film capacitor 36 used both for smoothing the second inverter 33 and for smoothing the secondary side of the DC-DC converter of the power supply converter 34, and a cooling plate 37 having an internal space through which the coolant flows. The housing 39 has an opening on the upper side of the first space 39a, and the second inverter 33 and the power supply converter 34 are housed in the first space 39a through the opening. The opening is closed by a lid 38, and therefore, the first space 39a is a closed space.

The wound-field motor 31 of the front-wheel drive device 30 that is driven by the second inverter 33 and the power supply converter 34 is housed in the second space 39b. The second power transmission mechanism 32 that reduces the rotational speed of the wound-field motor 31 and outputs the resultant rotation is housed in the third space 39c. In the housing 39, the second space 39b houses the wound-field motor 31 from the side, and is closed by a motor cover 31b fastened with bolts, not shown, to form a closed space. Motor shafts 31a extend from both sides of the wound-field motor 31 along its rotational axis. One of the motor shafts 31a passes through the motor cover 31b and is exposed to the outside of the housing 39. The other motor shaft 31a extends into the third space 39c.

The third space 39c houses the second power transmission mechanism 32 from the side, and is closed by a gear cover 32b fastened with bolts, not shown, to form a closed space. The other motor shaft 31a extending from the second space 39b is connected to the second power transmission mechanism 32, and the rotation of the wound-field motor 31 is input to the second power transmission mechanism 32 via the motor shaft 31a. The second power transmission mechanism 32 reduces the rotational speed of the wound-field motor 31 and outputs the resultant rotation from a gear shaft 32a. The gear shaft 32a passes through the gear cover 32b and is exposed to the outside of the housing 39. The driving force of the wound-field motor 31 output from the gear shaft 32a is transmitted to an axle 4a to drive the front wheels 4 (see FIG. 1).

### [Configuration of Heat Exchange System]

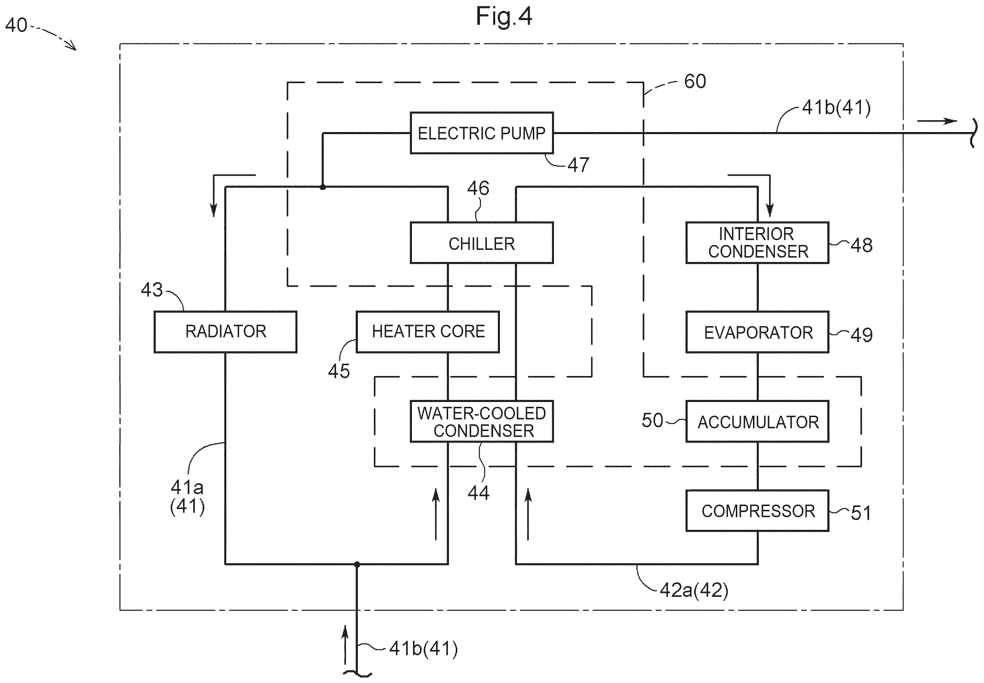

As shown in FIG. 1, the heat exchange system 40 is disposed on the front wheel 4 side of the four-wheel drive vehicle 1. As shown in FIG. 4, the heat exchange system 40 includes a coolant circuit 41 configured to circulate the coolant and a refrigerant circuit 42 configured to circulate a refrigerant. The coolant circuit 41 includes a radiator 43, a water-cooled condenser 44 (an example of a condenser), a heater core 45, a chiller 46 (an example of an evaporator), and an electric pump 47. The refrigerant circuit 42 includes the water-cooled condenser 44, the chiller 46, an interior condenser 48, an evaporator 49, an accumulator 50, and a compressor 51. In the water-cooled condenser 44 and the chiller 46, heat exchange occurs between the coolant and the refrigerant. The refrigerant is, for example, a hydrofluorocarbon (HFC) or a hydrofluoroolefin (HFO).

The coolant circuit 41 includes an annular first coolant channel 41a (an example of a coolant channel) configured to circulate the coolant through the radiator 43, the water-cooled condenser 44, the heater core 45, and the chiller 46 in this order. The coolant cooled by the radiator 43 flows through the first coolant channel 41a into the water-cooled condenser 44. The coolant that has entered the water-cooled condenser 44 is heated by absorbing heat from the refrigerant. The coolant that has left the water-cooled condenser 44 is further heated by the heater core 45 and flows into the chiller 46. The coolant that has entered the chiller 46 is cooled as heat is absorbed by the refrigerant. The coolant that has left the chiller 46 returns to the radiator 43 and is cooled in the radiator 43.

The coolant circuit 41 further includes a second coolant channel 41b (an example of a coolant channel) that branches off from the first coolant channel 41a and merges back into the first coolant channel 41a. The second coolant channel 41b branches off from an intermediate portion of the first coolant channel 41a that connects the chiller 46 and the radiator 43. The second coolant channel 41b that branches off from the first coolant channel 41a is pumped by an electric pump 47.

The coolant that has been pumped by the electric pump 47 and has left the heat exchange system 40 flows into a water heater 52 as shown in FIG. 1. The water heater 52 heats the coolant as needed, such as at extremely low temperatures, and also divides the second coolant channel 41b into two branches. One of the branches of the second coolant channel 41b extends toward the rear of the four-wheel drive vehicle 1 and is connected to the power conversion module 20 and the rear-wheel drive device 10. That is, the coolant that has left the water heater 52 flows toward the rear of the vehicle, and flows into the power conversion module 20 and the rear-wheel drive device 10 to cool the power conversion module 20 and the rear-wheel drive device 10. The coolant that has left the rear-wheel drive device 10 flows through the second coolant channel 41b into the battery 6 to cool the battery 6. The coolant that has left the battery 6 flows through the second coolant channel 41b and merges into an intermediate portion of the first coolant channel 41a that connects the radiator 43 and the water-cooled condenser 44.

The other branch of the second coolant channel 41b divided by the water heater 52 flows into the front-wheel drive device 30 to cool the front-wheel drive device 30. At this time, in the front-wheel drive device 30, heat generated by energizing the coil (either or both of the field coil and the armature coil) of the wound-field motor 31 is transferred through the motor shaft 31a, the housing 39, and the cooling plate 37, and exchanges heat with the coolant flowing through the internal space of the cooling plate 37, thereby raising the temperature of the coolant. The coolant with the raised temperature flows out of the front-wheel drive device 30, merges into the second coolant channel 41b through which the coolant that has left the battery 6 flows, and then flows into the heat exchange system 40. That is, the heat generated by energizing the wound-field motor 31 of the front-wheel drive device 30 is supplied to the heat exchange system 40. In this way, the second coolant channel 41b that cools the front-wheel drive device 30 does not extend toward the rear of the four-wheel drive vehicle 1, and instead, is arranged in the front part of the vehicle alone. Hereinafter, the second coolant channel 41b through which the coolant that has left the water heater 52 flows through the front-wheel drive device 30 and merges into the second coolant channel 41b through which the coolant that has left the battery 6 flows is sometimes referred to as third coolant channel 41c (an example of a coolant channel).

As shown in FIG. 4, the refrigerant circuit 42 includes an annular refrigerant channel 42a configured to circulate the refrigerant through the compressor 51, the water-cooled condenser 44, the chiller 46, the interior condenser 48, the evaporator 49, and the accumulator 50 in this order. The refrigerant compressed into a high-temperature compressed gas by the compressor 51 flows into the water-cooled condenser 44. In the water-cooled condenser 44, the refrigerant condenses into a liquid as heat is absorbed by the coolant. The refrigerant that has left the water-cooled condenser 44 absorbs heat from the coolant and evaporates into a gas in the chiller 46. The refrigerant that has left the chiller 46 heats air in the interior condenser 48. The heated air becomes warm air and is used for heating the vehicle cabin. When the vehicle cabin is heated, the evaporator 49 is not used. The refrigerant that has left the interior condenser 48 remains in a gaseous state and flows into the accumulator 50. When the gaseous refrigerant contains any liquid refrigerant, the accumulator 50 separates the liquid refrigerant. The gaseous refrigerant then flows out of the accumulator 50 and returns to the compressor 51 where the gaseous refrigerant is compressed again into a high-temperature compressed gas.

On the other hand, when the vehicle cabin is cooled, the interior condenser 48 is not used, and the evaporator 49 is used. Specifically, the gaseous refrigerant generated in the chiller 46 flows into the evaporator 49. In the evaporator 49, the gaseous refrigerant absorbs heat from air. The refrigerant that has absorbed heat from the air flows out of the evaporator 49, flows into the accumulator 50, and returns to the compressor 51. The air thus cooled due to the heat absorption becomes cool air and is used for cooling the vehicle cabin.

### [Configuration of Heat Exchange Module]

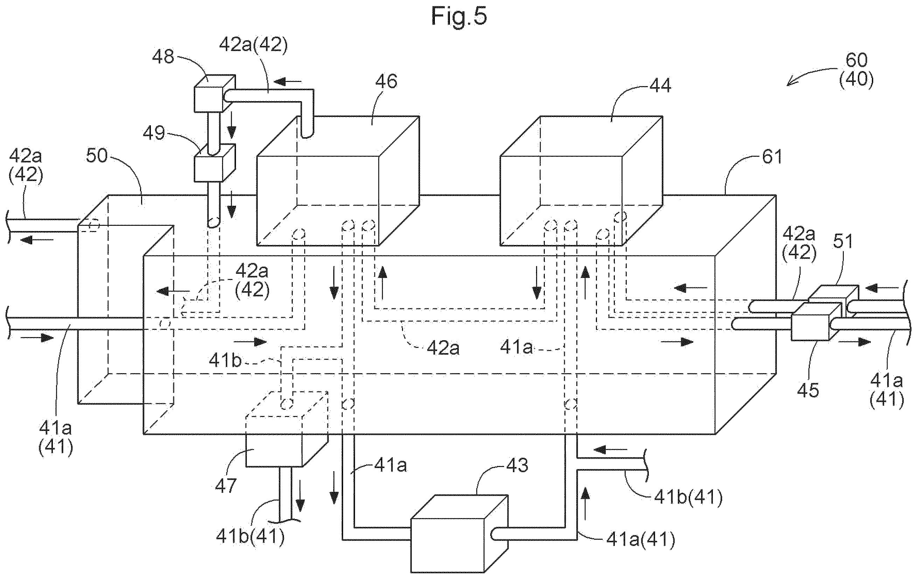

As shown in FIGS. 4 and 5, the heat exchange system 40 of the present embodiment includes a heat exchange module 60. The heat exchange module 60 is a module in which the water-cooled condenser 44, the chiller 46, the electric pump 47, and the accumulator 50 are integrated by being mounted on a manifold 61 in which parts of the first coolant channel 41a, second coolant channel 41b, and refrigerant channel 42a are formed. Since the configurations of the water-cooled condenser 44, the chiller 46, the electric pump 47, and the accumulator 50 are known in the art, detailed description thereof will be omitted.

### [Effects of Embodiment]

In the present embodiment, the rear-wheel drive device 10 and the power conversion module 20 are integrated. This can reduce the total volume compared to a case where they are configured as separate components. As a result, the space efficiency can be improved. Since the rear-wheel drive device 10 and the power conversion module 20 are arranged side by side and integrated, the overall height can be reduced and they can be disposed near the rear wheels 3. Moreover, common high-voltage wires and common coolant wires (the second coolant channel 41b) can be used for both the rear-wheel drive device 10 and the power conversion module 20.

In the present embodiment, the wound-field motor 31 is used as a drive motor for the front-wheel drive device 30. Accordingly, for example, when the temperature of the coolant that cools the wound-field motor 31 is lower than or equal to a predetermined temperature while the four-wheel drive vehicle 1 is stopped, the wound-field motor 31 is used to generate heat by energizing the field coil and the armature coil in such a manner that a rotating magnetic field is not generated. Heat can thus be generated without rotating the wound-field motor 31. As a result, even while the four-wheel drive vehicle 1 is stopped, the coolant flowing through the third coolant channel 41c can be heated to raise the temperature of the coolant, and the heat contained in the coolant can be supplied to the battery 6 to warm up the battery 6, or can be supplied to the air conditioning system (not shown) to heat the vehicle cabin.

By using the wound-field motor 31, drag loss can be reduced compared to a permanent magnet motor. Furthermore, the energy utilization efficiency during regenerative braking can be improved compared to an induction motor.

The permanent magnet motor 11 is better for low-speed rotation, while the wound-field motor 31 is better for high-speed rotation. In the present embodiment, the permanent magnet motor 11 is used in the rear-wheel drive device 10, and the wound-field motor 31 is used in the front-wheel drive device 30. This can ensure driving performance from low speed to high speed.

An air conditioning system for a vehicle cabin is typically disposed at the front of the vehicle. Therefore, disposing the heat exchange system 40 on the front wheel 4 side of the four-wheel drive vehicle 1 can reduce the length of the pipe for circulating the coolant or the refrigerant from the heat exchange system 40 to the air conditioning system. Accordingly, particularly during heating, the coolant heated by the heat (waste heat) generated by the front-wheel drive device 30 and the second inverter 33 is used for heating without being cooled. As a result, the heat utilization efficiency can be enhanced, and the energy efficiency etc. can be improved.

The heat exchange system 40 of the present embodiment includes the heat exchange module 60 including the manifold 61 in which parts of the first coolant channel 41a and second coolant channel 41b configured to circulate the coolant and part of the refrigerant channel 42a configured to circulate the refrigerant are integrated by being formed within the manifold 61. Therefore, there is no need to perform separate piping for the first coolant channel 41a, the second coolant channel 41b, and the refrigerant channel 42a, which can reduce both the manufacturing labor for the heat exchange system 40 and the size of the heat exchange system 40.

The heat exchange system 40 of the present embodiment includes the heat exchange module 60 in which the water-cooled condenser 44, the chiller 46, the electric pump 47, and the accumulator 50 are integrated by being mounted on the manifold 61. This can reduce the size of the heat exchange system 40.

The heat exchange system 40 of the present embodiment includes the heat exchange module 60 in which the function of the accumulator 50 is integrated with the water-cooled condenser 44, the chiller 46, and the electric pump 47, all mounted on the manifold 61. This can reduce the size of the heat exchange system 40.

### [Other Embodiments]

(1) In the above embodiment, the power supply converter 34 and the second inverter 33 are disposed at the front of the vehicle. However, the power supply converter 34 may be integrated into the power supply unit 22 located at the rear of the four-wheel drive vehicle 1, or part of the circuits of the power supply converter 34 and second inverter 33 may be integrated into the power supply unit 22.
(2) The heat exchange module 60 may have a configuration in which the manifold 61 and the accumulator 50 are integrated by providing the function of the accumulator 50 within the manifold 61.
(3) In the heat exchange module 60, at least one of the water-cooled condenser 44, the chiller 46, the electric pump 47, and the accumulator 50 may not be attached to the manifold 61. The heat exchange module 60 may be a module in which, in addition to the water-cooled condenser 44, the chiller 46, the electric pump 47, and the accumulator 50, or instead of at least one of the water-cooled condenser 44, the chiller 46, the electric pump 47, and the accumulator 50, at least one of the heater core 45, the interior condenser 48, the evaporator 49, the compressor 51, and the water heater 52 is integrated by being mounted in the heat exchange module 60.
(4) In the above embodiment, the coolant flowing through the second coolant channel 41b is used for warming up and cooling the battery 6. However, the refrigerant flowing through the refrigerant channel 42a or an insulating oil such as paraffin-based oil may be used.

### [Summary of Embodiment]

Hereinafter, the vehicle electric drive device 2 described above will be described.

An aspect of a vehicle electric drive device (2) includes, on the rear wheel (3) side of a four-wheel drive vehicle (1) including a rear-wheel drive mode and a four-wheel drive mode, a rear-wheel drive device (10) including a permanent magnet motor (11) and a first power transmission mechanism (12) and configured to be driven by electric power supplied from a battery (6) and transmit a driving rotational force to a rear wheel (3), and a power conversion module (20) in which a first inverter (21) configured to operate the rear-wheel drive device (10) and a power supply unit (22) connected to the battery (6) and configured to perform power conversion are integrated. The aspect of the vehicle electric drive device (2) further includes, on the front wheel (4) side of the four-wheel drive vehicle (1), a front-wheel drive device (30) including a wound-field motor (31) and a second power transmission mechanism (32) and configured to transmit a driving rotational force to a front wheel (4), and a heat exchange system (40) including a heat transfer mechanism and configured to use waste heat from the front-wheel drive device (30) and a second inverter (33) for an air conditioning system. The rear-wheel drive device (10) and the power conversion module (20) are integrated.

In a high-output four-wheel drive vehicle (1), traction is applied to the rear wheels (3) during acceleration. Therefore, in this aspect, smooth acceleration can be implemented by using, in the rear-wheel drive device (10), the permanent magnet motor (11) that is better for low-speed rotation. In this aspect, the rear-wheel drive device (10) and the power conversion module (20) are disposed at the rear of the four-wheel drive vehicle (1). Therefore, high-voltage wires and coolant wires needed for each of the rear-wheel drive device (10) and the power conversion module (20) can be arranged in a concentrated manner, which can minimize wiring and piping. As a result, the space occupied by the vehicle electric drive device (2) in the four-wheel drive vehicle (1) can be reduced.

In this aspect, the wound-field motor (31) is used as a drive motor for the front-wheel drive device (30). The wound-field motor (31) can be used to generate heat by energizing the field coil and the armature coil in such a manner that a rotating magnetic field is not generated. Heat can thus be generated without rotating the wound-field motor (31). Accordingly, even while the four-wheel drive vehicle (1) is stopped, a coolant that cools the wound-field motor (31) can be heated and used for heating the vehicle cabin.

An air conditioning system for a vehicle cabin is typically disposed at the front of the vehicle. Therefore, disposing the heat exchange system (40) at the front of the four-wheel drive vehicle (1) as in this aspect can reduce the length of the pipe for circulating the coolant or refrigerant from the heat exchange system (40) to the air conditioning system. Accordingly, particularly during heating, the coolant heated by the heat (waste heat) generated by the front-wheel drive device (30) and the second inverter (33) is used for heating without being cooled. As a result, the heat utilization efficiency can be enhanced, and the energy efficiency etc. can be improved.

Integrating the rear-wheel drive device (10) and the power conversion module (20) can reduce the total volume compared to a case where they are configured as separate components. As a result, the space efficiency can be improved. Moreover, common high-voltage wires and common coolant wires can be used for both the rear-wheel drive device (10) and the power conversion module (20).

As described above, a vehicle electric drive device (2) can be provided that is arranged suitably for high output and that can improve energy efficiency etc. in a four-wheel drive vehicle (1) in which front and rear wheels are rotated by separate drive motors.

The heat exchange system (40) preferably includes a heat exchange module (60) including a manifold (61) in which a coolant channel (41a, 41b) configured to circulate a coolant and a refrigerant channel (42a) configured to circulate a refrigerant are integrated.

As in this aspect, when the heat exchange system (40) includes the heat exchange module (60) including the manifold (61) in which the coolant channel (41a, 41b) configured to circulate a coolant and a refrigerant channel (42a) configured to circulate a refrigerant are integrated, there is no need to perform separate piping for the channels. This can reduce both the manufacturing labor for the heat exchange system (40) and the size of the heat exchange system (40).

The heat exchange module (60) preferably includes an accumulator (50) integrated with the manifold (61).

As in this aspect, when the heat exchange module (60) includes the accumulator (50) integrated with the manifold (61), the size of the heat exchange system (40) can be reduced.

The heat exchange module (60) preferably includes a condenser (44) and an evaporator (46) that are integrated with the manifold (61).

As in this aspect, when the heat exchange module (60) includes the condenser (44) and the evaporator (46) that are integrated with the manifold (61), the size of the heat exchange system (40) can be reduced.

It is preferable that, when the temperature of the coolant that cools the wound-field motor (31) is lower than or equal to a predetermined temperature while the four-wheel drive vehicle (1) is stopped, the wound-field motor (31) be energized to generate heat to raise the temperature of the coolant, and heat of the coolant with the raised temperature be supplied to the battery (6) and the air conditioning system.

In this aspect, it is possible to warm up the battery (6) and heat the vehicle cabin without driving the four-wheel drive vehicle (1).

Heat generated by energizing the wound-field motor (31) is preferably transferred through a motor shaft (31a), a housing (39), and a cooling plate (37) and is supplied to the heat exchange system (40).

In this aspect, the heat generated by energizing the wound-field motor (31) can be supplied to the heat exchange system (40) and effectively utilized.

### INDUSTRIAL APPLICABILITY

The present disclosure is applicable to electric drive devices for vehicles.

### Description of the Reference Numerals

1: four-wheel drive vehicle, 2: vehicle electric drive device, 3: rear wheel, 4: front wheel, 10: rear-wheel drive device, 11: permanent magnet motor, 12: first power transmission mechanism, 20: power conversion module, 21: first inverter, 22: power supply unit, 30: front-wheel drive device, 31: wound-field motor, 31a: motor shaft, 32: second power transmission mechanism, 33: second inverter, 37: cooling plate, 39: housing, 40: heat exchange system, 41a: first coolant channel (coolant channel), 41b: second coolant channel (coolant channel), 41c: third coolant channel (coolant channel), 42a: refrigerant channel, 44: water-cooled condenser (condenser), 46: chiller (evaporator), 50: accumulator, 60: heat exchange module, 61: manifold

## Claims

1. A vehicle electric drive device comprising:
on a rear wheel side of a four-wheel drive vehicle including a rear-wheel drive mode and a four-wheel drive mode,
a rear-wheel drive device including a permanent magnet motor and a first power transmission mechanism and configured to be driven by electric power supplied from a battery and transmit a driving rotational force to a rear wheel, and
a power conversion module in which a first inverter configured to operate the rear-wheel drive device and a power supply unit connected to the battery and configured to perform power conversion are integrated; and
on a front wheel side of the four-wheel drive vehicle,
a front-wheel drive device including a wound-field motor and a second power transmission mechanism and configured to transmit a driving rotational force to a front wheel, and
a heat exchange system including a heat transfer mechanism and configured to use waste heat from the front-wheel drive device and a second inverter for an air conditioning system, wherein the rear-wheel drive device and the power conversion module are integrated.

2. The vehicle electric drive device according to claim 1, wherein the heat exchange system includes a heat exchange module including a manifold in which a coolant channel configured to circulate a coolant and a refrigerant channel configured to circulate a refrigerant are integrated.

3. The vehicle electric drive device according to claim 2, wherein the heat exchange module includes an accumulator integrated with the manifold.

4. The vehicle electric drive device according to claim 2, wherein the heat exchange module includes a condenser and an evaporator that are integrated with the

5. The vehicle electric drive device according to claim 1, wherein when a temperature of a coolant that cools the wound-field motor is lower than or equal to a predetermined temperature while the four-wheel drive vehicle is stopped, the wound-field motor is energized to generate heat to raise the temperature of the coolant, and heat of the coolant with the raised temperature is supplied to the battery and the air conditioning system.

6. The vehicle electric drive device according to claim 1 or 5, wherein heat generated by energizing the wound-field motor is transferred through a motor shaft, a housing, and a cooling plate and is supplied to the heat exchange system.
